(19) Europäisches Patentamt
European Patent Office
Office européen des brevets

(11) **EP 2 688 757 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(21) Anmeldenummer: **12708264.2**

(22) Anmeldetag: **15.02.2012**

(51) Int Cl.:
*F25B 49/00* *(2006.01)*   *G01M 15/04* *(2006.01)*
*B60H 1/00* *(2006.01)*   *F25B 45/00* *(2006.01)*

(86) Internationale Anmeldenummer:
**PCT/EP2012/052555**

(87) Internationale Veröffentlichungsnummer:
**WO 2012/126678 (27.09.2012 Gazette 2012/39)**

(54) **VERFAHREN SOWIE DIAGNOSETESTER ZUM ERKENNEN EINES FEHLERS IN EINEM KÜHLKREISLAUF EINES KRAFTFAHRZEUGS**

METHOD AND DIAGNOSTIC TESTER FOR DETECTING A FAULT IN A COOLING CIRCUIT OF A MOTOR VEHICLE

PROCÉDÉ ET TESTEUR DE DIAGNOSTIC POUR DÉTECTER UNE DÉFAILLANCE DANS UN CIRCUIT DE REFROIDISSEMENT D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2011   DE 102011005928**
**07.04.2011   DE 102011006970**

(43) Veröffentlichungstag der Anmeldung:
**29.01.2014   Patentblatt 2014/05**

(73) Patentinhaber: **Robert Bosch GmbH**
**70442 Stuttgart (DE)**

(72) Erfinder: **HONIG, Benno**
**75181 Pforzheim (DE)**

(56) Entgegenhaltungen:
**EP-A1- 1 177 924      US-A- 5 481 884**
**US-A1- 2003 230 106      US-A1- 2010 186 430**

**Beschreibung**

Die Erfindung betrifft ein Verfahren sowie einen Diagnosetester zum Erkennen eines Fehlers in einem Kühlkreis eines Kraftfahrzeugs.

Stand der Technik

Bei der Wartung einer Klimaanlage eines Kraftfahrzeugs wird der Kühlkreislauf der Klimaanlage regelmäßig auf Fehler untersucht. Um einen solchen Fehler in einem Kühlkreislauf feststellen zu können, werden in bekannten Verfahren eine Mehrzahl von Messwerten manuell von einem Mechaniker interpretiert und analysiert. Dies erfordert eine tiefe Systemkenntnis sowie viel Erfahrung des Mechanikers und ist des Weiteren sehr zeit- und kostenaufwendig. Dokument US 2010/0186430 offenbart ein Verfahren gemäß Oberbegriff des Anspruchs 1.

Offenbarung der Erfindung

Aufgabe der vorliegenden Erfindung ist es, ein kostengünstiges und einfaches Verfahren sowie einen entsprechenden Diagnosetester zum zuverlässigen Erkennen eines Fehlers in einem Kühlkreislauf eines Kraftfahrzeugs bereitzustellen.

Diese Aufgabe wird durch ein Verfahren mit den Merkmalen des unabhängigen Verfahrensanspruchs sowie durch einen Diagnosetester mit den Merkmalen des unabhängigen Vorrichtungsanspruchs gelöst. Vorteilhafte Weiterbildungen ergeben sich aus den abhängigen Patentansprüchen.

Ein erfindungsgemäßes Verfahren zum Erkennen eines Fehlers in einem Kühlkreislauf eines Kraftfahrzeugs umfasst ein Verfahren gemäß dem unabhängigen Anspruch 1.

Verglichen mit konventionellen Verfahren zum Erkennen eines Fehlers in einem Kühlkreislauf birgt das erfindungsgemäße Verfahren den Vorteil, dass ein Fehler in einem Kühlkreislauf eines Kraftfahrzeugs unmittelbar erkannt oder ausgeschlossen werden kann. In konventionellen Verfahren ist es üblicherweise notwendig, dass von einem Mechaniker eine Vielzahl von gemessenen Parametern interpretiert und ausgewertet werden müssen. Dazu ist viel Erfahrung sowie ein sehr gutes Verständnis der thermodynamischen Abläufe in dem Kühlkreislauf erforderlich. Das erfindungsgemäße Verfahren erleichtert die Fehlersuche deutlich, da ein Fehler in dem Kühlkreislauf unmittelbar durch das Verfahren erkannt wird. Eine manuelle Auswertung mehrerer Messwerte der Klimaanlage ist nicht notwendig, was zum Einen eine Zeitersparnis und zum Anderen eine höhere Zuverlässigkeit in der Fehlersuche bietet, da ein manueller Auswertungsfehler durch einen Mechaniker ausgeschlossen ist.

Ein typischerweise in einem Kraftfahrzeug verwendeter Kühlkreislauf besteht aus einem geschlossenen Kreislauf, in welchem ein Kältemittel zirkuliert und weist üblicherweise, in Strömungsrichtung des Kältemittels, einen Kompressor, einen Kondensator, eine Expansionseinrichtung und einen Verdampfer auf. Im Betrieb des Kühlkreislaufs wird das Kältemittel in dem Kompressor auf einen Hochdruck verdichtet und dann in den Kondensator geleitet. Durch den Kondensator wird ein Luftstrom geführt gegen und das Kältemittel abgekühlt und vollständig kondensiert wird. Im Anschluss an den Kondensator wird das Kältemittel in der Expansionseinheit entspannt und tritt anschließend in den Verdampfer ein, durch den ein Luftstrom geleitet wird, der das Kältemittel erwärmt. Das Kältemittel tritt aus dem Verdampfer unverdichtet und in gasförmiger Phase aus und wird wieder zum Eingang des Kompressors geleitet.

Ein möglicher Fehler in dem zuvor beschriebenen Kühlkreislauf kann beispielsweise darin bestehen, dass der Kompressor das Kältemittel nicht ausreichend verdichtet oder Leckagen in dem Kühlkreislauf vorhanden sind. Nach einer Erkenntnis der Erfinder resultiert ein solcher Fehler in einen Druckabfall des Kältemittels. Insbesondere ist ein solcher Fehler durch einen Vergleich zwischen einem Kältemitteldruck bei eingeschaltetem Kompressor und einem Kältemitteldruck bei ausgeschaltetem Kompressor nachweisbar, da zwischen diesen beiden Druckwerten die höchste Druckdifferenz in dem Kühlkreislauf besteht.

Erfindungsgemäß wird in dem Verfahrensschritt (a) ein erster Kältemitteldruck bei ausgeschaltetem Kompressor gemessen. Bei ausgeschaltetem Kompressor herrscht im gesamten Kühlkreislauf der gleiche Kältemitteldruck, da keine Verdichtung des Kältemittels stattfindet, sodass es sich bei dem ersten gemessenen Kältemitteldruck um den geringsten Kältemitteldruck, der in dem Kühlkreislauf auftritt, handelt.

Mit dem Einschalten des Kompressors im Schritt (b) wird in dem Kühlkreislauf, insbesondere in einem Hochdruckbereich zwischen dem Kompressorausgang und dem Eingang der Expansionseinrichtung, der Kältemitteldruck erhöht.

In dem Schritt (c) wird ein zweiter Kältemitteldruck nach einem bestimmten Zeitintervall gemessen. Bei diesem zweiten Kältemitteldruck handelt es sich um den Druck, der nach dem Einschalten des Kompressors in dem Kühlkreislauf herrscht. Im Gegensatz zum ersten gemessenen Kältemitteldruck ist der zweite Kältemitteldruck eines intakten Kühlkreislaufs signifikant größer. Das Zeitintervall zwischen dem Messen des ersten Kältemitteldrucks und dem Messen des zweiten Kältemitteldrucks wird dabei ausreichend groß gewählt, um einen konstanten Druck in dem Kühlkreislauf durch den Kompressor aufzubauen.

In dem Schritt (d) wird der Differenzwert aus dem zweiten gemessenen Kältemitteldruck und dem ersten gemessenen Kältemitteldruck gebildet. Dieser Differenzwert stellt den Druckanstieg in dem Kältemittel dar, der durch das Einschalten des Kompressors im Schritt (b) verursacht wird.

In dem Schritt (e) wird der zuvor berechnete Differenzwert mit einem Referenzwert zum Erkennen eines Fehlers in dem Kühlkreislauf verglichen. Der Differenzwert, der den Druckanstieg in dem Kühlkreislauf darstellt, ist ein Indikator für einen Fehler in dem Kühlkreislauf. Ist der Druckanstieg zwischen ausgeschaltetem und eingeschaltetem Kompressor zu gering, kann daraus geschlossen werden, dass ein Fehler in dem Kühlkreislauf vorliegt. Der Referenzwert stellt den Druckanstieg dar, der in einem intakten Kühlkreislauf durch das Einschalten des Kompressors hervorgerufen wird. Durch den Vergleich des Differenzwerts mit dem Referenzwert kann ein Fehler in dem Kühlkreislauf unmittelbar erkannt werden.

Der Differenzwert setzt sich zusammen aus:

$$\Delta p = p(t2) - p(t1),$$

wobei p(t1) den Kältemitteldruck zum Zeitpunkt der ersten Messung des Kältemitteldrucks und p(t2) den Kältemitteldruck zum Zeitpunkt der zweiten Messung des Kältemitteldrucks darstellt.

Ein Fehler in dem Kühlkreislauf liegt vor, wenn:

$$\Delta p < \text{Referenzwert.}$$

Ein Fehler in dem Kühlkreislauf liegt nicht vor, wenn:

$$\Delta p \geq \text{Referenzwert.}$$

Ein solcher Referenzwert wird aus Versuchen an intakten Kühlkreisläufen unter verschiedenen Umgebungsbedingungen ermittelt und kann beispielsweise in tabellarischer Form zum Vergleich mit dem Differenzwert vorliegen.

Gemäß einer ersten Ausführungsform der Erfindung werden die Schritte (d) und (e) durch einen Diagnosetester ausgeführt. In einem solchen Diagnosetester wird der Differenzwert berechnet und dieser anschließend mit dem Referenzwert verglichen. Das Vorliegen eines Fehlers in dem Kühlkreislauf kann anschließend einem Mechaniker angezeigt werden.

Gemäß einer weiteren Ausführungsform der Erfindung umfasst das Kraftfahrzeug einen Motor, der vor dem Schritt (a) eingeschaltet wird, wobei sich der Motor während der Messungen im Leerlauf befindet. Durch den Motor des Kraftfahrzeugs können beispielsweise der Kompressor und das Gebläse angetrieben werden. Das Einschalten des Motors vor dem Schritt (a), dem Messen des ersten Kühlmitteldrucks bietet den Vorteil, dass der Motor des Kraftfahrzeugs bei dem späteren Einschalten des Kompressors bereits mit konstanter Drehzahl läuft und eine Anlaufphase des Motors keinen Einfluss auf das Verhalten des Kompressors hat.

Des Weiteren wird eine Temperaturvorwahl des Kühlkreislaufs auf "kalt" eingestellt. Eine solche Temperaturvorwahl regelt die Temperatur des in die Kabine strömenden Luftstroms und bewirkt bei "kalt" eine größtmögliche Kühlung des Luftstroms. Dazu ist es notwendig, dass der Kompressor im Anschließenden Test unter Vollast läuft, wobei die größte Verdichtung des Kältemittels erreicht wird. In dem Schritt (e) wird somit der größtmögliche Differenzwert ermittelt und ein Fehler im Kühlkreislauf ist leichter zu erkennen.

Ferner ist während der Messungen die Umgebungstemperatur vorzugsweise größer als 5°C. Dieser Temperaturbereich, in welchem die Umgebungstemperatur größer als 5°C ist, stellt den Temperaturbereich dar, bei welchem üblicherweise eine Klimaanlage eines Kraftfahrzeugs verwendet werden kann.

In einer weiteren Ausführungsform wird vor dem Schritt (a) der Motor für einen Zeitraum von 10 bis 30 Sekunden, insbesondere für etwa 20 Sekunden, laufen gelassen. Dadurch wird sichergestellt, dass sich in dem Motor des Kraftfahrzeugs konstante Bedingungen einstellen. Vorteilhafterweise hat der Motor des Kraftfahrzeugs vor dem Einschalten des Kompressors konstante Betriebsbedingungen erreicht und treibt den Kompressor, der später eingeschaltet wird, mit konstanter Drehzahl an.

Gemäß einer weiteren Ausführungsform der Erfindung beträgt das Zeitintervall vom Einschalten des Kompressors bis zum Messen des zweiten Kältemitteldrucks 10 bis 50 Sekunden, insbesondere etwa 30 Sekunden. Während dieses Zeitintervalls steigt der Druck in dem Kühlkreislauf an. Der Kompressor benötigt eine bestimmte Zeit, um einen konstanten Druck in dem Kühlkreislauf aufzubauen. Ein messbarer Differenzwert zwischen dem ersten Kältemitteldruck und dem zweiten Kältemitteldruck stellt sich erst nach einer gewissen Anlaufzeit des Kompressors ein. Der Druckanstieg in dem Kühlkreislauf kann idealerweise durch eine Gerade mit konstanter Steigung beschrieben werden. Der reale Druckanstieg in einem Kühlkreislauf verläuft allerdings zunächst etwas flacher und steigt schließlich mit einer annäherungsweise konstanten Steigung auf den Hochdruckwert des Kühlkreislaufs an. Mit einem Zeitintervall von 10 bis 50 Sekunden wird sichergestellt, dass sich in einem intakten Kühlkreislauf ein messbarer Druckunterschied aufgebaut hat und der Anlaufbereich des Kompressors, in welchem der Druck nur gering ansteigt, überschritten ist.

Gemäß der Erfindung ist der Referenzwert abhängig von dem ersten Kältemitteldruck bei ausgeschaltetem Kompressor, von dem Zeitintervall, vom Einschalten des Kompressors bis zum Messen des zweiten Kältemitteldrucks und von der Umgebungstemperatur. Der erste Kältemitteldruck bei ausgeschaltetem Kompressor ist variabel und hängt unter anderem von dem Füllstand des Kühlkreislaufs und der Temperatur des Kältemittels ab. Üblicherweise sollte der Kältemitteldruck bei ausgeschaltetem Kompressor in dem Kühlkreislauf mindestens +2 bar betragen, um den Kühlkreislauf betreiben zu können. Der Druck des Kühlkreislaufs steigt über die Zeit nicht zwangsläufig linear an, sondern muss für das jeweilige Zeitintervall zwischen den Messungen ermittelt werden. Ferner ist der Druckanstieg in einem Kühlkreislauf nicht linear abhängig von der Umgebungstemperatur und dem Ausgangskältemitteldruck bei ausgeschaltetem Kompressor. Der jeweilige Referenzwert wird daher in einem intakten Kühlkreislauf unter verschiedenen Bedingungen ermittelt.

In einer weiteren Ausführungsform der Erfindung wird ein Fehler in dem Kühlkreislauf erkannt, wenn der Differenzwert geringer ist als ein Referenzwert. Der Differenzwert beschreibt den realen Druckanstieg in dem Kühlkreislauf, wohingegen der Referenzwert den idealen Druckanstieg in einem intakten Kühlkreislauf beschreibt. Ist der Differenzwert geringer als der Referenzwert, so ist der Druckanstieg des Kühlkreislaufs geringer als der Druckanstieg eines intakten Kühlkreislaufs. Daraus kann geschlossen werden, dass ein Fehler, wie beispielsweise ein defekter Kompressor oder eine Leckage in dem Kreislauf, vorliegt.

In einer weiteren Ausführungsform werden die Messungen des Kältemitteldrucks an einem Ort in dem Kühlkreislauf kurz nach dem Kompressor ausgeführt. Dort ist der durch das Einschalten des Kompressors bedingte Druckanstieg des Kältemittels unmittelbar messbar, da keine weiteren Bauteile zwischen der Messeinrichtung und dem Kompressor liegen.

Es ist außerdem vorteilhaft, den Kältemitteldruck an einem Ort in dem Kühlkreislauf zwischen dem Kondensator und der Expansionseinrichtung zu messen, da in diesem Bereich die Temperatur des Kältemittels geringer ist als nach dem Austritt aus dem Kompressor. Es ist dann nicht notwendig, die Messeinrichtung hochtemperaturbeständig auszubilden.

Das erfindungsgemäße Verfahren kann mittels eines an eine Steuereinheit eines Kraftfahrzeugs, insbesondere eine Motor- oder Klimaanlagen-Steuereinheit, angeschlossenen Diagnosetesters durchgeführt werden.

Ferner betrifft die Erfindung einen Diagnosetester zur Ermittlung eines Fehlers in dem oben beschriebenen Kühlkreislauf gemäß dem unabhängigen Anspruch 8. Ein solcher Diagnosetester verwirklicht die oben beschriebenen Vorteile des Verfahrens zur Ermittlung eines Fehlers in einem Kühlkreislauf. Sämtliche mit Bezug auf das Verfahren beschriebene Ausführungsformen und damit verbundene Vorteile treffen in vorrichtungsmäßiger Entsprechung auch für den Diagnosetester zur Ermittlung eines Fehlers in einem Kühlkreislauf zu.

In einer weiteren Ausführungsform ist der Diagnosetester zum Anschließen an eine Steuereinheit, insbesondere eine Kraftfahrzeug-Motorsteuereinheit oder eine Kraftfahrzeug-Klimaanlagensteuereinheit ausgebildet.

Die Erfindung ist nachfolgend anhand eines Ausführungsbeispiels mit Bezug auf die beiliegenden Figuren näher erläutert. Es zeigen:

     Fig. 1: eine schematische Darstellung eines Kühlkreislaufs in einem Kraftfahrzeug mit einer Steuereinheit und einem Diagnosetester; und

     Fig. 2: eine schematische Darstellung des Druckverlaufs eines Kältemittels an einem Ort in einem Kühlkreislauf gemäß Fig. 1.

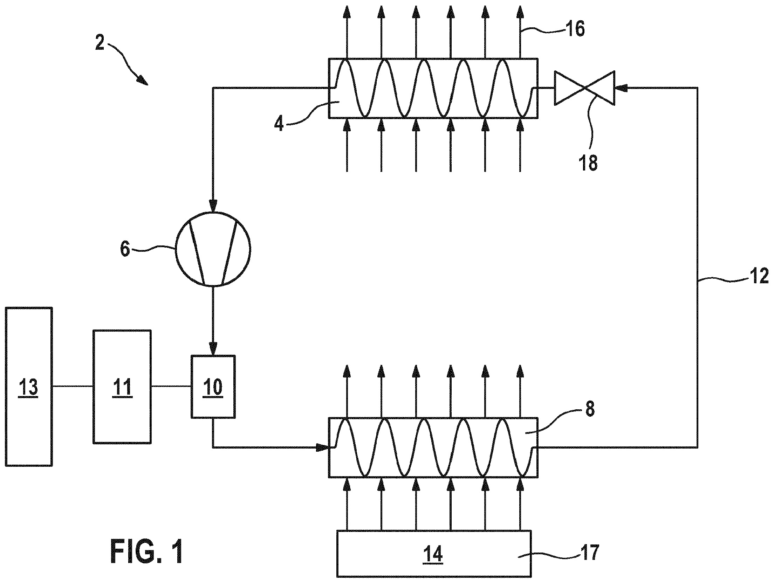

Fig. 1 zeigt schematisch einen Kühlkreislauf 2 mit einer Steuereinheit 11 und mit einem Diagnosetester 13 eines Kraftfahrzeugs, in dem ein Kältemittel 12 zirkuliert. Der Kühlkreislauf 2 weist in Strömungsrichtung des Kältemittels 12 einen Verdampfer 4, einen Kompressor 6, eine Messeinrichtung 10, einen Kondensator 8, und eine Expansionseinrichtung 18 auf.

In dem Kompressor 6 findet eine Verdichtung des Kältemittels 12 statt, wobei der Druck des gasförmigen Kältemittels 12 auf einen Hochdruck erhöht wird. Zwischen dem Kompressor 6 und dem Kondensator 8 ist die Messeinrichtung 10 angeordnet, in welcher der Druck des Kältemittels 12 gemessen wird. In dem Kondensator 8 wird das gasförmige Kältemittel 12 anschließend gegen einen Kondensatorluftstrom 17 abgekühlt und vollständig kondensiert. Bei dem Kondensatorluftstrom 17 handelt es sich um einen Luftstrom aus einem Gebläse 14, das Umgebungsluft durch den Kondensator 8 bläst oder gesaugt wird. Der Kondensator 8 in Fig.1 umfasst einen Wärmetauscher, durch den der Kondensatorluftstrom 17 strömt und das Kältemittel 12 kühlt, sodass dieses vollständig kondensiert. Dabei nimmt der Kondensatorluftstrom 17 die Wärme auf, die das Kältemittel 12 zur vollständigen Kondensation abgibt. Der erwärmte Kondensatorluftstrom 17 wird in die Umgebung abgeführt. In der Expansionseinrichtung 18 wird das Kältemittel 12 danach auf einen Niederdruck entspannt und kühlt dabei ab und tritt in den Verdampfer 4 ein. Über einen Verdampfungsluftstrom 16, der aus der Umgebung angesaugt wird, wird dem Kältemittel Wärme zugeführt. Bei dem Wärmetausch mit dem Kältemittel 12 kühlt der Verdampfungsluftstrom 16 ab und wird anschließend dem Innenraum eines Kraftfahrzeugs zugeführt. Im Anschluss an den Verdampfer 4 wird das gasförmige Kältemittel 12 wieder an den Eingang des Kompressors 6 geleitet.

Die Fig. 1 zeigt des Weiteren eine mit der Messeinrichtung 10 verbundene Steuereinheit 11 und einen mit dieser verbundenen Diagnosetester 13. Bei der Steuereinheit 11 handelt es sich um eine Kraftfahrzeug-Motorsteuereinheit oder eine Kraftfahrzeug-Klimaanlagensteuereinheit, durch welche typischerweise der Kompressor 6 sowie das Gebläse 14 steuerbar sind. Ein Diagnosetester 13 wird üblicherweise in einer Werkstattumgebung mit der Steuereinheit 11 des Kraftfahrzeugs verbunden und kann von der Messeinrichtung 10 Messwerte zur Auswertung erhalten. Ferner können durch den Diagnosetester 13 die Zeitintervalle zwischen dem Einschalten des Motors und dem Messen des ersten Kältemitteldrucks sowie vom Einschalten des Kompressors bis zum Messen des zweiten Kältemitteldrucks festgelegt und an die Steuereinheit 11 übermittelt werden, die den Motor und den Kühlkreislauf daraufhin entsprechend steuert.

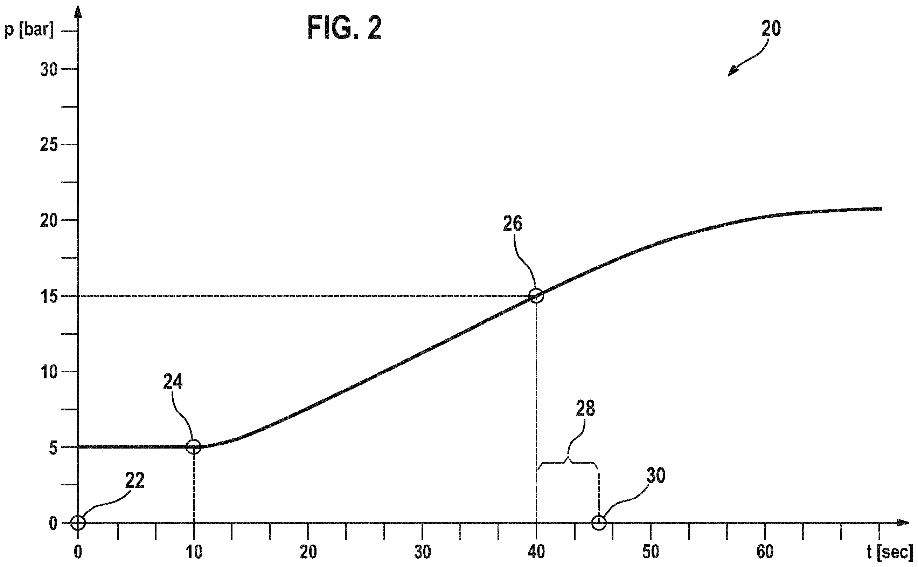

Fig. 2 zeigt ein exemplarisches Druckverlaufdiagramm 20 des Kühlmitteldrucks an der Messeinrichtung 10 in dem Kühlkreislauf 2 aus Fig. 1. Der Kühlmitteldruck ist in einem Diagramm dargestellt, wobei auf der Ordinaten der Druck in bar und auf der Abszisse die Zeit in Sekunden aufgetragen ist. Der Druckverlauf in Fig. 2 ist über einen Zeitraum von 70 Sekunden dargestellt, wobei der Druck zunächst konstant bleibt und dann stetig ansteigt und sich einem Wert von etwa 20 bar annähert. Die Druckverlaufkurve steigt dabei zu Beginn stärker an und flacht anschließend ab, um schließlich einen näherungsweise konstanten Druckwert anzunehmen. Bei dem in Fig. 2 dargestellten Druckverlauf handelt es sich um einen erfahrungsgemäßen Verlauf des Kühlmitteldrucks nach dem Einschalten des Kompressors 6, wobei ein erster und ein zweiter Messzeitpunkt 24, 26 in dem Diagramm eingezeichnet sind.

Das in Fig. 2 dargestellte Druckverlaufdiagramm beschreibt den Druckverlauf eines Kältemittels 12 eines intakten Kühlkreislauf 2 gemäß Fig. 1, wobei an dem ersten Messpunkt 24 der Kompressor eingeschaltet wird. Der Druckverlauf ist über den Zeitraum eines Testverfahrens zum Erkennen eines Fehlers in dem Kühlkreislauf 2 dargestellt, wobei der Startpunkt 22 des Tests bei T = 0 Sek. und einem Kältemitteldruck von 5 bar ist.

Zur Durchführung des Testverfahrens müssen einige notwendige Vorbedingungen getroffen werden. Dazu gehört, dass zum Startpunkt 22 der Kompressor 6 des Kühlkreislaufs 2 aus Fig. 1 ausgeschaltet und das Gebläse 14 zum Wärmeaustausch des Kondensators 8 und des Verdampfers 4 mit dem durch das Gebläse 14 erzeugten Luftstrom 16, 17 beim Startpunkt 22 vorzugsweise eingeschaltet ist. Des Weiteren ist der Motor des Kraftfahrzeugs zum Startpunkt 22 des Tests ebenfalls eingeschaltet und befindet sich vorzugsweise über den gesamten Zeitraum der Messung im Leerlauf. Die Umgebungstemperatur ist während des Tests größer als 5 °C. Ferner wird zum Startpunkt 22 die Temperaturvorwahl einer Klimaanlagenbedienungseinheit innerhalb des Kraftfahrzeuges auf "kalt" eingestellt.

Der Kältemitteldruck von 5 bar, der zum Startpunkt 22 in dem Diagramm in Fig. 2 herrscht, ist exemplarisch für einen Kältemitteldruck bei ausgeschaltetem Kompressor 6. Der Kältemitteldruck kann abhängig von den Umgebungsbedingungen sowie vom Füllstand des Kühlkreislaufs 22 variieren. Um den im Folgenden beschriebenen Test zum Erkennen eines Fehlers in dem Kühlkreislauf 2 durchführen zu können, muss der Kältemitteldruck zum Startpunkt 22 mindestens +2 bar betragen. Zudem sollte der Kühlkreislauf 2 nicht frisch befüllt sein, da eine möglicherweise vorhandene kleine Leckage nicht erkannt wird.

Der Motor des Kraftfahrzeuges kann in dem Kühlkreislauf 2 beispielsweise den Kompressor 6 und das Gebläse 14 betreiben. Die Temperaturvorwahl "kalt" bewirkt die größtmögliche Kühlung des Luftstroms 14, 17 und stellt somit sicher dass der Kompressor 6 in dem Kühlkreislauf 2 während des anschließenden Tests unter Volllast läuft.

Das Einschalten des Kompressors 6 am Messpunkt 24 kann beispielsweise manuell durch einen Benutzer oder durch einen Befehl der mit dem Kompressor 6 verbundenen Steuereinheit 11 ausgeführt werden.

Nach dem Startpunkt 22 des Tests bleibt der Druck über einen Zeitraum von 10 Sekunden bis zum ersten Messpunkt 24 konstant, wobei der Zeitraum von 10 Sekunden einen exemplarischen Wert darstellt. Zur Durchführung des Tests sollte dieser Wert in dem Bereich von 10 bis 30 Sekunden, insbesondere von etwa 20 Sekunden, liegen. Dieser Zeitraum dient zur Einstellung eines konstanten Betriebszustandes im Kühlkreislauf 2.

Am ersten Messpunkt 24 wird ein erster Kältemitteldruck des Kältemittels 12 bei ausgeschaltetem Kompressor 6 gemessen. Der am ersten Messpunkt 24 gemessene Druck des Kältemittels 12 wird daraufhin von der Messeinrichtung 10 an den Diagnosetester 13 übermittelt und dort abgespeichert. Des Weiteren wird der Kompressor 6 des Kühlkreislaufs 2 am ersten Messpunkt 24 eingeschaltet.

Mit dem Einschalten des Kompressors 6 am ersten Messpunkt 24 beginnt der Druck des Kältemittels 12 in dem Diagramm in Fig. 2 anzusteigen, da der Kompressor 6 das Kältemittel 12 in dem Kühlkreislauf 2 verdichtet. Der in Fig. 2 dargestellte Druckanstieg des Kältemitteldrucks verläuft zunächst etwas flacher und steigt dann bis zum zweiten Messpunkt 26, bei welchem ein zweiter Messwert von der Messeinheit 10 gemessen wird, relativ konstant an.

Der zweite Messpunkt 26 befindet sich in dem in Fig. 2 dargestellten Diagramm 30 Sekunden nach dem ersten Messpunkt 24. An dem zweiten Messpunkt 26 wird der zweite Kältemitteldruck von der Messeinrichtung 10 gemessen und in dem Diagnosetester 13 abgespeichert. Das Zeitintervall vom Einschalten des Kompressors beim ersten Messpunkt 24 bis zum Messen des zweiten Kältemitteldrucks zum zweiten Zeitpunkt 26 beträgt in dem hier dargestellten Ausführungsbeispiel 30 Sekunden. Dabei handelt es sich lediglich um einen exemplarischen Wert für ein Zeitintervall, das für eine verlässlichen Durchführung des Verfahrens zum Erkennen eines Fehlers in dem Kühlkreislauf 2 erforderlich ist. Das Zeitintervall zwischen dem ersten 24 und dem zweiten Messpunkt 26 sollte vorzugsweise zwischen 10 bis 50 Sekunden, insbesondere 30 Sekunden liegen, sodass der zweite Kältemitteldruck zu einem Zeitpunkt gemessen wird, bei welchem ein signifikanter Druckanstieg in dem Kältemittel 12 eines intakten Kühlkreislaufs 2 verglichen mit dem Kältemitteldruck zum ersten Messpunkt 24 feststellbar ist.

In dem Druckverlaufdiagramm 20 in Fig. 2 ist der Druck des Kältemittels 12 zum zweiten Messpunkt 26 von 5 bar auf 15 bar angestiegen, wobei es sich dabei um einen exemplarischen Wert für einen Kältemitteldruck handelt, der zu dem zweiten Messpunkt 26 in einem intakten Kühlkreislauf 2 herrscht. Im Anschluss an den zweiten Messpunkt 26 ist in Fig. 2 ein Auswertzeitraum 28 dargestellt, in welchem die an dem ersten 24 und dem zweiten Messpunkt 26 aufgenommenen Messwerte des Kältemitteldrucks ausgewertet werden. Zur Auswertung wird die Differenz aus dem zweiten Kältemitteldruck zum zweiten Messpunkt 26 und dem ersten Kältemitteldruck zum ersten Messpunkt 24 gebildet. Dieser Differenzwert wird mit einem Referenzwert zum Erkennen eines Fehlers in dem Kühlkreislauf 2 verglichen. Ein solcher Referenzwert beschreibt ein für das Zeitintervall zwischen dem ersten Messpunkt 24 und dem zweiten Messpunkt 26 typischen Mindestdruckanstieg des Kältemittels 12 in einem intakten Kühlkreislauf 2. Dieser Referenzwert wird aus Versuchen an einem intakten Kühlkreislauf 2 ermittelt. Der Referenzwert ist zudem abhängig von dem ersten Kältemitteldruck bei ausgeschaltetem Kompressor, dem Zeitintervall vom Einschalten des Kompressors bis zum Messen des zweiten Kältemitteldrucks sowie von der Umgebungstemperatur und dem verwendeten Kühlmittel.

Zum Erkennen eines Fehlers in dem Kühlkreislauf 2 wird der Differenzwert aus den Messwerten des zweiten Kältemitteldrucks und des ersten Kältemitteldrucks mit dem Referenzwert verglichen. Ein Fehler in dem Kühlkreislauf 2 wird erkannt, wenn der Differenzwert kleiner als der Referenzwert ist.

Ein Fehler in dem Kühlkreislauf 2 liegt vor, wenn: $p\,t2 - p\,t1$ Referenzwert

Ein fehlerfreier Kühlkreislauf 2 liegt vor, wenn: $p\,t2 - p\,t1 \geq$ Referenzwert, wobei p(t1) den Kältemitteldruck am ersten Messpunkt 24 und p(t2) den Kältemitteldruck am zweiten Messpunkt 26 darstellt.

Die Auswertung wird von dem Diagnosetester 13 durchgeführt, wobei der Differenzwert mit einem zugehörigen Referenzwert, der dem Zeitintervall zwischen dem ersten Messpunkt 24 und dem zweiten Messpunkt 26 sowie den Umgebungsbedingungen und dem verwendeten Kühlmittel 12 entspricht, verglichen wird. Der Auswertungszeitraum 28 zur Auswertung der gemessenen Drucklagen, beträgt in dem Diagramm in Fig. 2 exemplarisch 5 Sekunden. Dieser Auswertungszeitraum 28 ist abhängig von der Rechnerleistung des Diagnosetesters 13. Zum Endzeitpunkt 30 des Tests, der in dem Diagramm in Fig. 2 exemplarisch bei 45 Sekunden eingezeichnet ist, kann beispielsweise das Ergebnis des Vergleichs des Differenzwerts mit dem Referenzwert von dem Diagnosetester 13 ausgegeben werden, um einem Mechaniker anzuzeigen, ob ein Fehler in dem Kühlkreislauf 2 vorliegt.

Das voran beschriebene Verfahren bietet eine schnelle und kostengünstige Methode, einen Fehler in einem Kühlkreislauf 2, wie beispielsweise eine Leckage oder einem defekten Kompressor, zuverlässig zu erkennen. Zur Durchführung des Verfahrens muss man lediglich auf eine bereits vorhandene Messeinrichtung 10 in dem Kühlkreislauf 2 zurückgreifen, durch welche der Kühlmitteldruck zu verschiedenen Zeitpunkten messbar ist. Vorteilhafterweise müssen die Komponenten des Kühlkreislaufs 2 nicht einzeln ausgebaut und getestet werden um einen Fehler festzustellen.

**Patentansprüche**

1. Verfahren zum Erkennen eines Fehlers in einem Kühlkreislauf (2) eines Kraftfahrzeuges, umfassend, in Strömungsrichtung eines Kältemittels (12), einen Kompressor (6), einen Kondensator (8), eine Expansionseinrichtung (18) und einen Verdampfer (4), wobei das Verfahren die folgenden Schritte umfasst:

   (a) Messen eines ersten Kältemitteldrucks bei ausgeschaltetem Kompressor (6);
   (b) Einschalten des Kompressors (6); und

   **gekennzeichnet durch** die Schritte:

   (c) Messen eines zweiten Kältemitteldrucks nach einem bestimmten Zeitintervall;
   (d) Bilden eines Differenzwerts aus dem in (c) gemessenen zweiten Kältemitteldruck und dem in (a) gemessenen ersten Kältemitteldruck; und
   (e) Vergleichen des Differenzwerts mit wenigstens einem Referenzwert zum Erkennen eines Fehlers in dem Kühlkreislauf (2), **dadurch** gekennzeichnet, dass:

   der Referenzwert abhängig von dem ersten Kältemitteldruck bei ausgeschaltetem Kompressor (6), von dem Zeitintervall vom Einschalten des Kompressors (6) bis zum Messen des zweiten Kältemitteldrucks, und von der Umgebungstemperatur ist.

2. Verfahren nach Anspruch 1, wobei die Schritte (d) und (e) durch einen Diagnosetester (13) ausgeführt werden.

3. Verfahren nach einem der vorangehenden Ansprüche, wobei das Kraftfahrzeug einen Motor umfasst, der vor dem Schritt (a) eingeschaltet wird, wobei sich der Motor während der Messungen im Leerlauf befindet.

4. Verfahren nach einem der vorangehenden Ansprüche, wobei vor dem Schritt (a) der Motor für einen Zeitraum von 10 bis 30sec, insbesondere von etwa 20sec, laufen gelassen wird.

5. Verfahren nach einem der vorangehenden Ansprüche, wobei das Zeitintervall vom Einschalten des Kompressors (6) bis zum Messen des zweiten Kältemitteldrucks 10 bis 50sec, insbesondere etwa 30sec ist.

6. Verfahren nach einem der vorangehenden Ansprüche, wobei bei dem Schritt (e) ein Fehler in dem Kühlkreislauf (2) erkannt wird, wenn der Differenzwert geringer ist als ein Referenzwert ist.

7. Verfahren nach einem der vorangehenden Ansprüche, wobei die Messungen des Kältemitteldrucks an einem Ort in dem Kühlkreislauf (2) kurz nach dem Kompressor (6) ausgeführt werden.

8. Diagnosetester (13) zum Ermitteln eines Fehlers in einem Kühlkreislauf (2) eines Kraftfahrzeuges, der, in Strömungsrichtung eines Kältemittels (12), einen Kompressor (6), einen Kondensator (8), eine Expansionseinrichtung (18) und einen Verdampfer (4) umfasst, **dadurch gekennzeichnet, dass**:

   der Diagnosetester (13) dazu ausgebildet ist, einen Differenzwert aus einem ersten Kältemitteldruck in dem Kühlkreislauf (2), der bei ausgeschaltetem Kompressor (6) ermittelt worden ist, und einem zweiten Kältemitteldruck, der nach einem bestimmten Zeitintervall nach dem Einschalten des Kompressor (6) ermittelt worden ist, zu bilden, und diesen Differenzwert mit mindestens einem Referenzwert zu vergleichen, um einen Fehler in dem Kühlkreislauf (2) zu erkennen, **dadurch gekennzeichnet, dass**:

      der Referenzwert abhängig von dem ersten Kältemitteldruck bei ausgeschaltetem Kompressor (6), von dem Zeitintervall vom Einschalten des Kompressors (6) bis zum Messen des zweiten Kältemitteldrucks, und von der Umgebungstemperatur ist..

9. Diagnosetester (13) nach Anspruch 8, **dadurch gekennzeichnet, dass** der Diagnosetester (13) zum Anschließen an eine Steuereinheit (11), insbesondere eine Kraftfahrzeug-Motorsteuereinheit oder eine Kraftfahrzeug-Klimaanlagensteuereinheit ausgebildet ist.

**Claims**

1. Method for detecting a fault in a cooling circuit (2) of a motor vehicle, comprising, in the direction of flow of a refrigerant (12), a compressor (6), a condenser (8), an expansion device (18) and a vaporizer (4), wherein the method comprises the following steps:

   (a) measuring a first refrigerant pressure when the compressor (6) is switched off;
   (b) switching on the compressor (6); and

   **characterized by** the steps:

   (c) measuring a second refrigerant pressure after a specific time interval;
   (d) forming a differential value from the second refrigerant pressure measured in (c) and the first refrigerant pressure measured in (a); and
   (e) comparing the differential value with at least one reference value in order to detect a fault in the cooling circuit (2), **characterized in that**:

      the reference value is dependent on the first refrigerant pressure when the compressor (6) is switched off, on the time interval from the switching on of the compressor (6) up to the measurement of the second refrigerant pressure, and on the ambient temperature.

2. Method according to Claim 1, wherein the steps (d) and (e) are executed by a diagnostic tester (13).

3. Method according to one of the preceding claims, wherein the motor vehicle comprises an engine which is switched on before the step (a), wherein the engine is in the idling mode during the measurements.

4. Method according to one of the preceding claims, wherein before the step (a) the engine is allowed to run for a time period of 10 to 30 sec, in particular of approximately 20 sec.

5. Method according to one of the preceding claims, wherein the time interval from the switching on of the compressor (6) up to the measurement of the second refrigerant pressure is 10 to 50 sec, in particular approximately 30 sec.

6. Method according to one of the preceding claims, wherein in the step (e) a fault is detected in the cooling circuit (2) if the differential value is lower than a reference value.

7. Method according to one of the preceding claims, wherein the measurements of the refrigerant pressure are carried out at a location in the cooling circuit (2) slightly downstream of the compressor (6).

8. Diagnostic tester (13) for detecting a fault in a cooling circuit (2) of a motor vehicle which comprises, in the direction of flow of a refrigerant (12), a compressor (6), a condenser (8), an expansion device (18) and a vaporizer (4), **characterized in that**:

the diagnostic tester (13) is designed to form a differential value from a first refrigerant pressure in the cooling circuit (2), which has been determined when the compressor (6) is switched off, and a second refrigerant pressure which has been determined after a specific time interval after the switching on of the compressor (6), and to compare this differential value with at least one reference value, in order to detect a fault in the cooling circuit (2), **characterized in that** the reference value is dependent on the first refrigerant pressure when the compressor (6) is switched off, on the time interval from the switching on of the compressor (6) up to the measurement of the second refrigerant pressure, and on the ambient temperature.

9. Diagnostic tester (13) according to Claim 8, **characterized in that** the diagnostic tester (13) is designed for connection to a control unit (11), in particular a motor vehicle engine control unit or a motor vehicle air-conditioning control unit.

**Revendications**

1. Procédé de détection d'un défaut dans un circuit de refroidissement (2) d'un véhicule automobile, comprenant, dans le sens de l'écoulement d'un liquide de refroidissement (12), un compresseur (6), un condenseur (8), un dispositif d'expansion (18) et un évaporateur (4), le procédé comprenant les étapes suivantes :

(a) mesure d'une première pression de liquide de refroidissement avec le compresseur (6) arrêté ;
(b) mise en marche du compresseur (6) ; et

**caractérisé par** les étapes :

(c) mesure d'une deuxième pression de liquide de refroidissement après un intervalle de temps donné ;
(d) formation d'une valeur différentielle à partir de la deuxième pression de liquide de refroidissement mesurée en (c) et la première pression de liquide de refroidissement mesurée en (a) ; et
(e) comparaison de la valeur différentielle avec au moins une valeur de référence en vue de détecter un défaut dans le circuit de refroidissement (2), **caractérisé en ce que**

la valeur de référence est dépendante de la première pression de liquide de refroidissement avec le compresseur (6) arrêté, de l'intervalle de temps entre la mise en marche du compresseur (6) et la mesure de la deuxième pression de liquide de refroidissement et de la température ambiante.

2. Procédé selon la revendication 1, les étapes (d) et (e) étant exécutées par un testeur de diagnostic (13).

3. Procédé selon l'une des revendications précédentes, le véhicule automobile comprenant un moteur qui est mis en marche avant l'étape (a), le moteur se trouvant au ralenti pendant les mesures.

4. Procédé selon l'une des revendications précédentes, le moteur étant mis à fonctionner pendant une période de 10 à 30 secondes, notamment d'environ 20 secondes avant l'étape (a).

5. Procédé selon l'une des revendications précédentes, l'intervalle de temps entre la mise en marche du compresseur (6) et la mesure de la deuxième pression de liquide de refroidissement étant de 10 à 50 secondes, notamment d'environ 30 secondes.

6. Procédé selon l'une des revendications précédentes, un défaut étant détecté à l'étape (e) dans le circuit de refroidissement (2) lorsque la valeur différentielle est inférieure à une valeur de référence.

7. Procédé selon l'une des revendications précédentes, les mesures de la pression de liquide de refroidissement étant effectuées à un endroit dans le circuit de refroidissement (2) à courte distance après le compresseur (6).

8. Testeur de diagnostic (13) destiné à détecter un défaut dans un circuit de refroidissement (2) d'un véhicule automobile, lequel comprend, dans le sens de l'écoulement d'un liquide de refroidissement (12), un compresseur (6), un condenseur (8), un dispositif d'expansion (18) et un évaporateur (4), **caractérisé en ce que** :

le testeur de diagnostic (13) est configuré pour former une valeur différentielle d'une première pression de liquide de refroidissement dans le circuit de refroidissement (2), qui a été déterminée avec le compresseur (6) arrêté, et d'une deuxième pression de liquide de refroidissement, qui a été déterminée après un intervalle de temps donné après la mise en marche du compresseur (6), et pour comparer cette valeur différentielle avec au moins une valeur de référence en vue de détecter un défaut dans le circuit de refroidissement (2), **caractérisé en ce que** la valeur de référence est dépendante de la première pression de liquide de refroidissement avec le compresseur (6) arrêté, de l'intervalle de temps entre la mise en marche du compresseur (6) et la mesure de la deuxième pression de liquide de refroidissement et de la température ambiante.

9. Testeur de diagnostic (13) selon la revendication 8, **caractérisé en ce que** le testeur de diagnostic (13) est configuré pour être raccordé à une unité de commande (11), notamment une unité de commande de moteur de véhicule automobile ou une unité de commande de climatiseur de véhicule automobile.

FIG. 1

EP 2 688 757 B1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100186430 A